# EUROPÄISCHE PATENTSCHRIFT

(11) **EP 1 072 185 B1**
(45) Veröffentlichungstag und Bekanntmachung des Hinweises auf die Patenterteilung: **12.05.2004**
(21) Anmeldenummer: 00114385.8
(22) Anmeldetag: 05.07.2000
(51) Int. Cl.: A01F 29/20

(54) **Einstellvorrichtung für den Schneidspalt an Häckslern**
Shredder with shear bar adjusting device
Hacheuse munie d'un dispositf de réglage du contre-couteau

(30) Priorität: 26.07.1999 DE 19934982
(43) Veröffentlichungstag der Anmeldung: 31.01.2001
(73) Patentinhaber: Case Harvesting Systems GmbH, 01844 Neustadt (DE)
(72) Erfinder: Einighammer, Hans Joseph, Dr., 40225 Düsseldorf (DE); Hauke, Rudolf, Dr., 89168 Niederstotzingen (DE)
(74) Vertreter: Müller, Lutz

(56) Entgegenhaltungen:
- EP-A- 0 072 016
- EP-A- 0 291 216
- EP-A- 0 649 591
- DE-A- 19 735 698
- US-A- 4 198 006

## Beschreibung

Die Erfindung betrifft eine Einstellvorrichtung für den Schneidspalt an Häckslern zur Verarbeitung landwirtschaftlicher Erntegüter, forstwirtschaftlicher Kulturen sowie für sogenannte nachwachsende Rohstoffe mit den Merkmalen nach dem Oberbegriff des Patentanspruches 1.

Derartige Häcksler befinden sich vorzugsweise als Arbeitsaggregat in gezogenen oder selbstfahrenden Feldhäckslern, stationären Häckselmaschinen oder als Zusatzbaugruppe in anderen landwirtschaftlichen Erntemaschinen, wie beispielsweise in Mähdreschern zum Zerkleinern des ausgedroschenen Strohs. Sie weisen eine rotierende Häckseltrommel mit an deren Umfang schrauben- bzw. keilförmig angeordneten oder aus kurzen Segmenten bestehende Häckselmesser auf. Diese wirken mit einer quer zur Fahrtrichtung zeigenden und horizontal ausgerichteten Gegenschneide zusammen, die beidseitig nahe der Häckseltrommel am Häckseltrommelgehäuse befestigt ist, so daß das Häckselgut über die Gegenschneide den Häckselmessern zugeführt und durch deren Zusammenwirken in kleine Stücke geschnitten wird.
Mit fortlaufendem Einsatz werden jedoch die Häckselmesser stumpf, so daß sie von einer in den Häcksler integrierten Schleifeinrichtung relativ häufig nachgeschliffen werden müssen. Da für das Einhalten der gewünschten Häcksellänge und zur Minimierung der Antriebsleistung für die Häckseltrommel neben scharfen Häckselmessern ein sehr enger Schneidspalt notwendig ist, muß nach jedem Nachschleifen die Einstellung der Gegenschneide zu den Häckselmessern neu vorgenommen werden. So ist es beispielsweise bei selbstfahrenden Feldhäckslern mit einem hohen Durchsatz an Häckselgut üblich, diesen Einstellvorgang durch den Bediener vom Fahrerstand aus vorzunehmen.

Einstellvorrichtungen für die Gegenschneide an Häckslern sind bereits in einigen Ausführungsvarianten bekannt geworden, die im Anwendungsfall an Feldhäckslern nun näher erläutert werden sollen.

Es ist aus der DE 29 26 538 C2 bekannt, die Gegenschneide mit einem beidseitig an ihr und am Häckseltrommelgehäuse angeordneten Einstellmechanismus auf die mit Häckselmessern besetzte rotierende Häckseltrommel zu und von dieser weg zu bewegen. Das ist völlig unabhängig voneinander auf beiden Seiten möglich. Zur Verstellung selbst dienen mit Schraubspindeln verbundene Elektromotoren, die nach beendetem Schleifen der Häckselmesser zuerst die eine Seite der Gegenschneide auf Knopfdruck des Bedieners an die Häckselmesser bis zu deren Kontakt heranstellen und danach die andere. Der Zustellvorgang wird dann vom Bediener manuell unterbrochen, wenn er aufgrund des Kontaktes ein Ticken hört. Nachteilig an dieser Einstellvorrichtung ist einmal deren Ungenauigkeit durch die undefinierte Reaktionszeit des Bedieners. Zum anderen ist dieser Einstellvorgang zeitraubend und er erfordert, daß der Bediener den Fahrerstand verläßt. Schließlich kann ein Bedienungsfehler zur Zerstörung des gesamten Häckslers führen.

Mit der EP 0 291 216 B1 ist eine weitere Einstellvorrichtung für den Schneidspalt zwischen der Gegenschneide und den Häckselmessern bekannt geworden, bei der der Einstellvorgang weitestgehend automatisiert wurde. Dazu werden den Kontakt zwischen der Gegenschneide und den Häckselmessern signalisierende Meßeinrichtungen eingesetzt, was in diesem Fall auf Schwingungen ansprechende Klopfsensoren sind. Je ein Klopfsensor ist hierfür im Bereich der Gegenschneide auf deren linken und rechten Seite angebracht, deren Signale einem Mikroprozessor und einer Steuervorrichtung zugeleitet werden. Diese Einrichtungen sorgen dafür, daß ab einer bestimmten Größe der Signale der Zustellvorgang der Gegenschneide auf der einen Seite abgebrochen und danach auf der anderen Seite eingeleitet wird. Nach jedem Kontakt stellt die Steuervorrichtung durch Umsteuern der Drehrichtung der Elektromotoren die Gegenschneide ein Stück weg von den Häckselmessem, was so lange wiederholt wird, bis die Gegenschneide den gewünschten Schneidspalt zu den Häckselmessern aufweist und sie sich in einer parallelen Position zu diesen befindet.

Obwohl der Einstellvorgang automatisch abläuft, haften dieser Einstellvorrichtung dennoch einige Nachteile an. Das ist einmal deren Funktionsunsicherheit, weil mechanische bzw. akustische Störsignale aus dem Umfeld des Häckslers, zum Beispiel vom Antriebssystem herrührender Körperschall und sonstige Betriebsstörpegel, die Signalaufnahme aus dem Kontakt zwischen der Gegenschneide und den Häckselmessern stören. Um diesen Nachteil in Grenzen zu halten, sind Tiefpaßfilter zur Signalaufbereitung nötig, die jedoch die Herstellungskosten für die Einstellvorrichtung erhöhen. Desweiteren sind Klopfsensoren an sich störanfällig, was sich durch deren ungünstigen Ort der Anbringung im mit Erntegut, Feuchtigkeit und Schmutz am meisten belasteten Bereich noch negativer auswirkt. Da es zur Erzeugung eines vom Klopfsensor erkennbaren Signals zu einem ziemlich heftigen Kontakt zwischen der Gegenschneide und den Häckselmessern kommen muß, unterliegen diese dadurch einem unnötig hohen Verschleiß. Dieses nahe Heranstellen der Gegenschneide führt logischerweise zu einem längeren Rückstellweg und darüber hinaus zu einer Erhöhung der Anzahl der Zu- und Rückstellvorgänge der Gegenschneide bis zu ihrer endgültig parallen Position zu den Häckselmessem, wodurch der Einstellvorgang relativ lange dauert. Schließlich wären noch die Einsatzgrenzen dieser Einstellvorrichtung zu erwähnen, da sie nicht in der Lage ist, die Kontaktstelle weder am Umfang noch über die Breite der Häckseltrommel zu lokalisieren.

Der Vollständigkeit halber ist noch auf die Einstellvorrichtung des Schneidspaltes nach der DE 43 35 786 A1 hinzuweisen, die prinzipiell gleich wie die nach der EP 0 291 216 B1 aufgebaut ist. Der Unterschied liegt lediglich in einer verbesserten Signalaufbereitung, wobei die Signale der Klopfsensoren jeweils einer Tiefpaßschaltung und zusätzlich einer nachgeschalteten Schwellwertschaltung zugeführt werden, so daß an deren Ausgängen die Impulssignale entstehen. In einer Ausführung sind die beiden Impulssignale in einem ODER-Gatter verknüpft. Dieses gemeinsame Impulssignal wird dann einem Zähler an dessen Zähleingang und einem retriggerbaren Zeitglied sowie der Steuervorrichtung zugeführt. Alternativ werden die beiden Impulssignale in einem Antivalenzgatter verknüpft und so ebenfalls dem Zähler sowie der Steuervorrichtung zugeführt. Nachteilig an dieser Einstellvorrichtung ist, daß die bei der EP 0 291 216 B1 bereits bemängelte Funktionsunsicherheit lediglich etwas abgeschwächt wird und die übrigen Nachteile vollinhaltlich bestehen bleiben. Als weiterer Nachteil kommt hinzu, daß die beschriebenen Maßnahmen zur Funktionsverbesserung die Herstellungskosten noch weiter erhöhen.

Deshalb liegt der Erfindung die Aufgabe zugrunde, eine Einstellvorrichtung für den Schneidspalt an Häckslem zu schaffen, die mit hoher Funktionssicherheit die Annäherung bzw. schon die kleinste Berührung der Gegenschneide an die Häckselmesser einer Häckseltrommel signalisiert, die störunanfällig und verschleißfrei arbeitet, deren Herstellungskosten gering sind, die während des Einstellvorganges an der Gegenschneide und den Häckselmessern keinen Verschleiß verursacht, die eine Einstellung des Schneidspalts in kurzer Zeit ermöglicht und die die Annäherungs- bzw. Kontaktstelle zwischen der Gegenschneide und den Häckselmessem am Umfang und innerhalb der Breite der Häckseltrommel lokalisieren kann.

Diese Aufgabe wird durch den Gegenstand des Patentanspruches 1 gelöst, wobei in den Unteransprüchen Merkmale aufgeführt sind, die die Erfindung in vorteilhafter Weise weiterentwickeln.

Durch die Anordnung der an einer Einstellvorrichtung für den Schneidspalt zwischen den Häckselmessern und der Gegenschneide beteiligten Teile Gegenschneide, Gegenschneidenträger, Einstellmechanismus, Häckseltrommelgehäuse, Häckseltrommel und Häckselmesser liegt durch deren Aneinandereihung in dieser Reihenfolge symbolisch gesehen ein elektrischer Leiterkreis vor. Dieser Leiterkreis wird durch die elektrische Isolierung von wenigstens der Gegenschneide gegenüber den übrigen zur Einstellvorrichtung gehörenden Teilen zwar unterbrochen, jedoch über eine zusätzliche elektrische Verbindung, in der sich eine Spannungsquelle und eine den Stromfluß auswertende Einrichtung befinden, nun in der Ausbildung als Meßkreis wieder geschlossen. Letzteres ist jedoch nur dann der Fall, wenn wenigstens eine Kontaktstelle zwischen der Gegenschneide und mindestens einem Häckselmesser infolge des Heranstellens der Gegenschneide an die Häckselmesser besteht. Während der Zeit dieses Kontaktes fließt ein Kurzschlußstrom, der den Kontakt mittels des so gebildeten Meßkreises signalisiert. Voraussetzung dafür ist aber, daß sowohl die elektrisch isolierten Teile als auch die übrigen zur Einstellvorrichtung gehörenden Teile untereinander elektrisch leitend verbunden sind.

Dabei hat es sich als zweckmäßig erwiesen, die Gegenschneide gemeinsam mit dem Gegenschneidenträger gegenüber den übrigen zur Einstellvorrichtung gehörenden Teilen Einstellmechanismus, Häckseltrommelgehäuse, Häckseltrommel und Häckselmesser elektrisch zu isolieren, um die sichere Befestigung der Gegenschneide auf dem Gegenschneidenträger nicht zu gefährden.

Es ist aber ebenso noch eine akzeptable Lösung, neben der Gegenschneide und dem Gegenschneidenträger auch den Einstellmechanismus in die Isolierung mit einzubeziehen.

Zur Speisung des Meßkreises kann sowohl eine Gleichspannungsquelle als auch eine Wechselspannungsquelle angewendet werden. In beiden Fällen wird der Stromfluß als Maß dafür genommen, um den Ort der Kontaktstelle zwischen der Gegenschneide und den Häckselmessern der Häckseltrommel zu lokalisieren. Das ist erfindungsgemäß deshalb möglich, da sich die Widerstände im Meßkreis aufgrund der sich ändernden geometrischen Abmessungen der in den Meßkreis einbezogenen Teile in Abhängigkeit von der Lage der Kontaktstelle ändern. Diese Widerstandsänderungen stehen in einem festen Zusammenhang zum Stromfluß im Meßkreis.
Im Falle des Einsatzes einer Gleichspannungsquelle bei stillstehender oder langsam drehender Häckseltrommel liegen sogenannte Gleichstromverhältnisse vor, das heißt, daß sich nur die rein ohmschen Widerstände der Gegenschneide und des Gegenschneidenträgers einerseits und der Häckseltrommel und der Häckselmesser andererseits in Abhängigkeit von der Lage der Kontaktstelle verändern. Das bedeutet, daß der Ort der Kontaktstelle durch die Stromstärke, die sich nach dem einfachen Ohmschen Gesetz ergibt, ermittelbar ist.

Bei mit Betriebsdrehzahl rotierender Häckseltrommel werden durch jeden Kontakt kurze Stromimpulse erzeugt, deren Kontaktzeiten deutlich im Bereich unter 1 Millisekunde liegen. Da diese Stromimpulse in Wechselstromkomponenten zerlegbar sind und die Widerstände der Gegenschneide und des Gegenschneidenträgers einerseits und der Häckseltrommel und der Häckselmesser andererseits auch induktive Anteile enthalten, die sich ebenfalls in Abhängigkeit von der Lage der Kontaktstelle verändern, gilt für diese Wechselstromkomponenten das Ohmsche Gesetz für Wechselstrom. Damit ergibt sich zusätzlich zur rein ohmschen Widerstandsänderung auch eine induktive, die sich in einer Änderung der Stromimpulsform äußert, wodurch ein deutlicheres Signal entsteht als bei der alleinigen Erfassung der ohmschen Widerstände.

Im Falle des Einsatzes einer Wechselspannungsquelle gilt ebenfalls das Ohmsche Gesetz für Wechselstrom, das heißt, daß sich auch hier die ohmschen und die induktiven Widerstände der Gegenschneide und des Gegenschneidenträgers einerseits und der Häckseltrommel und der Häckselmesser andererseits in Abhängigkeit von der Lage der Kontaktstelle verändern, wodurch aus der damit verbundenen Änderung der Wechselstromamplituden die Lage der Kontaktstelle zwischen der Gegenschneide und den Häckselmessern genau feststellbar ist. Die Berücksichtigung beider Widerstandskomponenten führt auch hier zu einem deutlicheren Signal als bei der alleinigen Erfassung der ohmschen Komponente. Die Wechselspannungsfrequenz sollte vorteilhafter Weise wenigstens 200 Kilohertz betragen, damit die Kontaktimpulse auch sicher erkannt werden, weil dann in die Dauer eines Kontakts mehrere Schwingungen der Wechselspannung fallen.

In einer vorteilhaften Ausgestaltung der Einstellvorrichtung ist es ausreichend, mit nur einem Meßkreis zu arbeiten, indem dessen elektrische Verbindung einenends entweder am linken oder rechten äußeren Ende der elektrisch isolierten Teile kontaktgebend angeschlossen ist und anderenends an den übrigen zur Einstellvorrichtung gehörenden Teilen.

In einer weiteren zweckmäßigen Ausgestaltung der Einstellvorrichtung ist es möglich, neben dem einen vorstehend erwähnten Meßkreis einen zweiten auf der gegenüberliegenden Seite der elektrisch isolierten Teile analog wie den einen anzubringen, wodurch die Einstellvorrichtung störsicherer als mit nur einem Meßkreis arbeitet. Durch die Symmetrie beider Meßkreise in Form einer Brückenschaltung wird die Kontaktstelle außerdem genauer gemessen. Für die Verarbeitung des Signals der den Stromfluß im Meßkreis auswertenden Einrichtung im Falle des Vorhandenseins einer Kontaktstelle hat es sich einmal bewährt, diesen Stromfluß auf dem Display eines Strommessers zur Anzeige zu bringen, so daß der Bediener des Häckslers den Zustellvorgang der Gegenschneide auf die Häckselmesser manuell unterbrechen kann und zusätzlich beispielsweise durch die Darstellung der Länge der Gegenschneide auf dem Display die Kontaktstelle angezeigt bekommt.

Eine analoge Verarbeitung des Signales ist aber ebenso mittels eines Signalgebers denkbar, der beispielsweise ein akustisches Signal in verschiedenen Tonlagen erzeugt, was für eine grobe Ortsanzeige ausreichend ist. Beim Vorhandensein einer automatisch arbeitenden Einstellvorrichtung bietet es sich an, daß das Signal der den Stromfluß auswertenden Einrichtung dazu benutzt wird, um auf den Bewegungsablauf des Einstellmechanismus direkt Einfluß zu nehmen, indem beispielsweise die Stellmotoren beim ersten Kontakt der Gegenschneide mit wenigstens einem Häckselmesser von einer Steuereinrichtung sofort angehalten werden.

Schließlich ist es mit dieser Einstellvorrichtung auch möglich, das Häckselmesser am Umfang der Häckseltrommel zu orten, das die Gegenschneide berührt. Dazu wird auf der Häckseltrommel ein Permanentmagnet befestigt, der vorteilhafterweise einem Häckselmesser zugeordnet wird. Ein Magnetfeldsensor, der beispielsweise am Gegenschneidenträger angebracht ist, registriert dann den Vorbeigang des Permanentmagneten. Da mit dieser Anordnung gleichzeitig die Umfangsgeschwindigkeit der Häckseltrommel gemessen werden kann und die Anzahl der Häckselmesser am Umfang bekannt ist, kann die Kontaktstelle elektronisch über eine Prozessorfunktion dem betreffenden Häckselmesser zugeordnet werden.

Somit wären als Vorteile der Erfindung zu nennen, daß sie eine hohe Funktionssicherheit aufweist, weil bereits die kleinste Berührung eines Häckselmessers mit der Gegenschneide garantiert einen Stromfluß auslöst. Dadurch kommt es auch weder an der Gegenschneide noch an den Häckselmessern zumindest durch den Einstellvorgang zu keinem meßbaren Verschleiß. Da dieser kurze Kontakt schon zur Signalgewinnung genügt, läuft der Einstellvorgang in kurzer Zeit ab. Die zur Einstellvorrichtung gehörenden Teile sind darüber hinaus völlig störunanfällig und unterliegen keinerlei Verschleiß beim betriebsgemäßen Einsatz. Der einfache Aufbau der Einstellvorrichtung und die geringe Anzahl der dafür notwendigen Teile halten auch noch die Herstellungskosten gering. Schließlich ist es mit dieser Einstellvorrichtung zusätzlich möglich, die Kontaktstelle zwischen der Gegenschneide und dem Häckselmesser am Umfang und innerhalb der Breite der Häckseltrommel zu lokalisieren.

Die Erfindung soll nun anhand eines Ausführungsbeispieles mit zwei verschiedenen Möglichkeiten der Signalerzeugung beim Kontakt der Gegenschneide mit wenigstens einem Häckselmesser näher erläutert werden, wobei die einzelnen Figuren zeigen:
- Fig. 1:: eine schematische Darstellung der zur Einstellvorrichtung gehörenden Teile
- Fig. 2:: einen Schnitt A-A nach Fig. 1
- Fig. 3:: ein Ersatzschaltbild für die zur Einstellvorrichtung gehörenden und einen symbolischen elektrischen Leiterkreis bildenden Teile eines herkömmlichen Häckslers
- Fig. 4:: ein Ersatzschaltbild für die zur Einstellvorrichtung gehörenden und einen symbolischen elektrischen Leiterkreis bildenden Teile mit einem integrierten Meßkreis
- Fig 5:: ein Ersatzschaltbild für die zur Einstellvorrichtung gehörenden und einen symbolischen elektrischen Leiterkreis bildenden Teile mit zwei integrierten Meßkreisen.

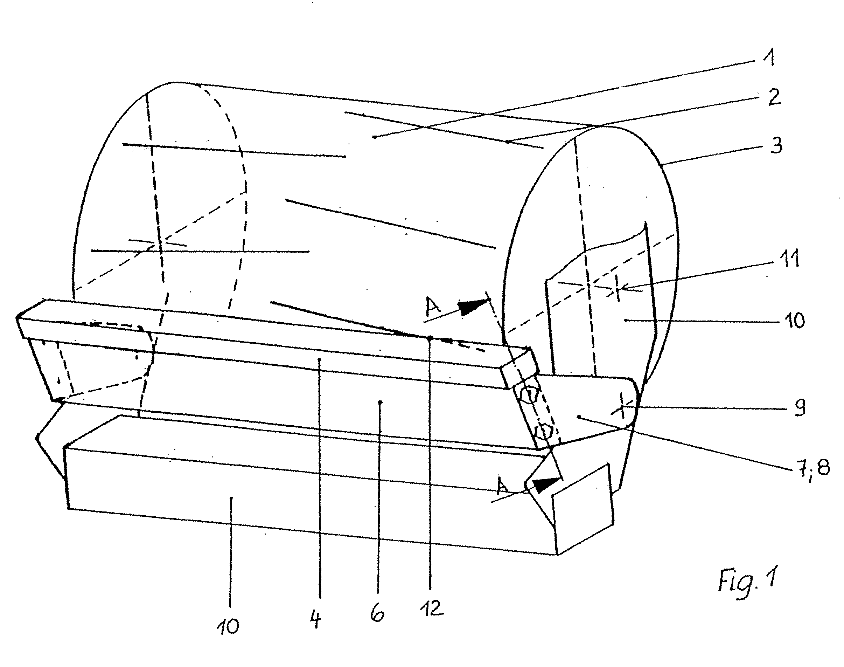

In Figur 1 ist einmal die Häckseltrommel 1 zu sehen, die mit pfeilförmig angeordneten Häckselmessern 2 besetzt ist. Deren radial vorstehende Schneidkanten bilden den Rotationskreis 3 der Häckseltrommel 1, dem die Gegenschneide 4 im Abstand des Schneidspaltes 5 gegenübersteht. Die Gegenschneide 4 ist auf einem stabilen Gegenschneidenträger 6 befestigt, an dem beidseitig der Einstellmechanismus 7 in Form von verschwenkbaren Armen 8 angeordnet ist. Diese Arme 8 sind in Gelenkpunkten 9 am Häckseltommelgehäuse 10 verdrehbar aufgenommen, so daß durch deren Verschwenken die Größe des Schneidspaltes 5 veränderbar ist. Da es auf die Mittel zum Verschwenken nicht ankommt, sind sie der Einfachheit halber weggelassen worden. Schließlich ist die Häckseltrommel 1 mittels beidseitig am Häckseltrommelgehäuse 10 angeschraubten Lagern 11 verdrehbar innerhalb der Einstellvorrichtung räumlich fixiert.

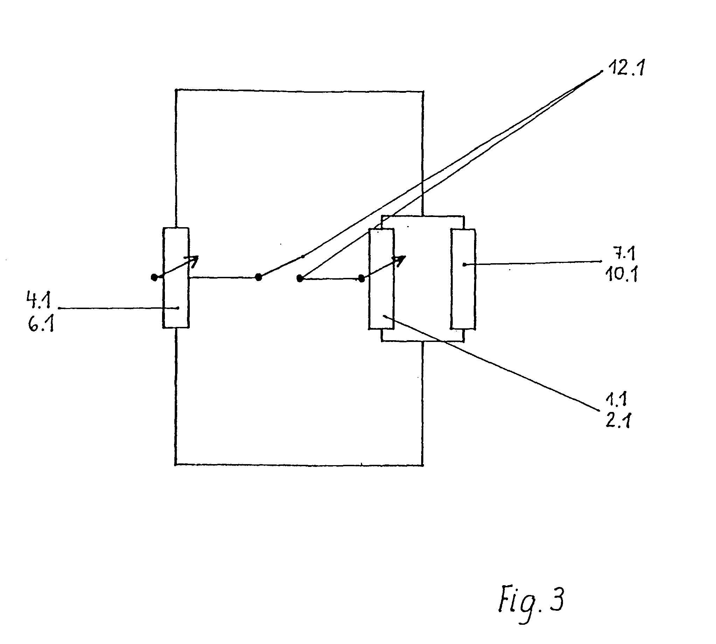

Der bis hierher beschriebene Aufbau einer Einstellvorrichtung für den Schneidspalt 5 entspricht dem eines vorbekannten Häckslers, dessen Teile auch als niederohmiger elektrischer Leiterkreis betrachtet werden können, wie es im Ersatzschaltbild der Figur 3 gezeigt ist. In diesem elektrischen Leiterkreis kann man drei getrennte und elektrisch miteinander verbundene Ersatzwiderstände unterscheiden, wobei der erste Ersatzwiderstand 4.1 ; 6.1 die Gegenschneide 4 und den Gegenschneidenträger 6 verkörpert, der zweite Ersatzwiderstand 1.1 ; 2.1 die Häckseltrommel 1 mit den Häckselmessern 2 und der dritte Ersatzwiderstand 7.1 ; 10.1 den Einstellmechanismus 7 und das Häckseltrommelgehäuse 10. Die beim Heranstellen der Gegenschneide 4 an die Häckselmesser 2 zur Minimierung des Schneidspaltes 5 irgenwo über die Breite der Häckseltrommel 1 gesehen auftretende Kontaktstelle 12 ist in Figur 3 als Schalter 12.1 dargestellt. Da der Ort der Kontaktstelle 12 über die Breite der Häckseltrommel 1 mit den Häckselmessern 2 sowie auch über die Breite der Gegenschneide 4 und den Gegenschneidenträger 6 betrachtet veränderlich ist, sind die Ersatzwiderstände 4.1 ; 6.1 bzw. 1.1 ; 2.1 als Potentiometer ausgeführt.

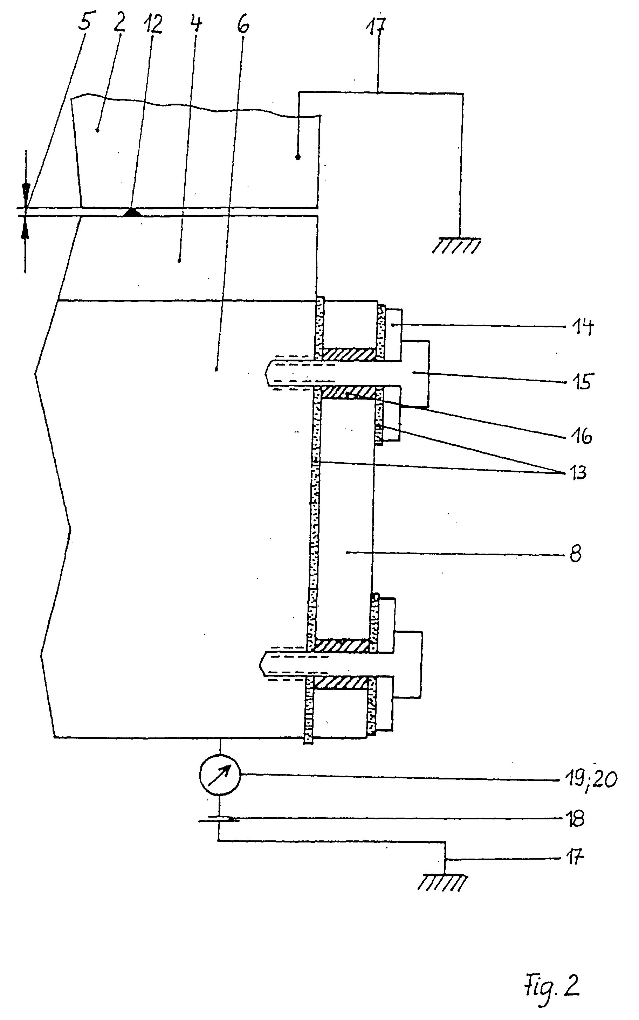

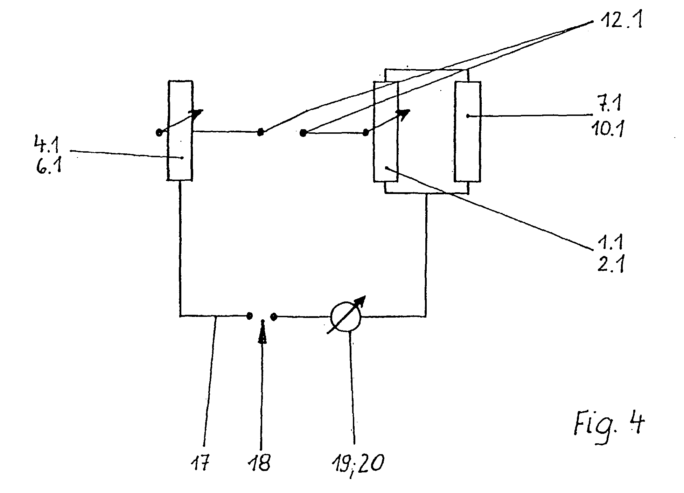

Die erfindungsgmäßen Veränderungen an der Einstellvorrichtung für den Schneidspalt 5 sind in Figur 2 zu sehen. Hier ist der symbolische elektrische Leiterkreis an der Stelle zwischen dem Gegenschneidenträger 6 und dem Arm 8 des Einstellmechanismus 7 durch eine elektrische Isolierung aufgetrennt. Dazu befindet sich zwischen den beiden äußeren Seitenflächen des Gegenschneidenträgers 6 und jedem Arm 8 eine geeignete Isolierschicht 13 sowie auch unter den Unterlegscheiben 14 der die Arme 8 mit dem Gegenschneidenträger 6 verbindenden Schrauben 15. Zusätzlich stecken in den Durchgangsbohrungen der Arme 8 isolierende Hülsen 16, um einen elektrischen Kontakt der Schrauben 15 mit den Armen 8 zu verhindern. Die so gegenüber den übrigen Teilen der Einstellvorrichtung isolierten Teile Gegenschneide 4 und Gegenschneidenträger 6 sind mit ihrem in Fahrtrichtung des Häckslers gesehenen linken äußeren Ende einenends mit einer elektrischen Verbindung 17 kontaktgebend verbunden. Deren anderes Ende ist an die übrigen zur Einstellvorrichtung gehörenden Teilen elektrisch leitend angeschlossen. In dieser elektrischen Verbindung 17 befindet sich eine Spannungsquelle 18 und eine den Stromfluß auswertende Einrichtung 19, die im einfachsten Falle ein herkömmlicher Strommesser 20 mit Display ist. Damit ist ein symbolischer elektrischer Leiterkreis in der Ausbildung als ein Meßkreis entstanden, der die Kontaktstelle 12 enthält. In Figur 4 ist das dementsprechende Ersatzschaltbild gezeigt.

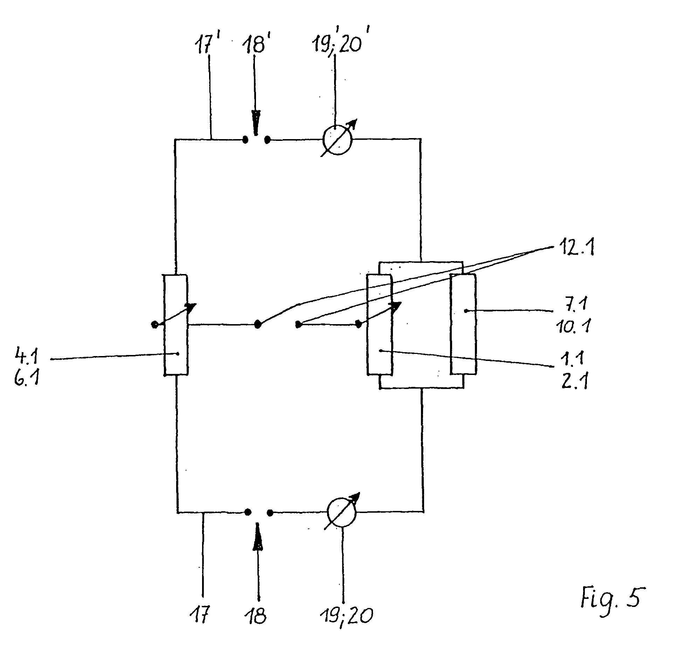

Eine andere Möglichkeit mit zwei Meßkreisen ist in Figur 5 wiedergegeben. Dazu ist an die elektrisch isolierten Teile Gegenschneide 4 und Gegenschneidenträger 6 an deren in Fahrtrichtung des Häckslers gesehenen rechten äußeren Ende eine weitere elektrische Verbindung 17' kontaktgebend angeschlossen, deren anderes Ende ebenfalls mit den übrigen zur Einstellvorrichtung gehörenden Teilen elektrisch leitend verbunden ist. Auch diese elektrische Verbindung 17' enthält eine Spannungsquelle 18' und eine den Stromfluß auswertende Einrichtung 19'.

### Bezugszeichenaufstellung

- 1: Häckseltrommel
- 1.1: zweiter Ersatzwiderstand
- 2: Häckselmesser
- 2.1: zweiter Ersatzwiderstand
- 3: Rotationskreis
- 4: Gegenschneide
- 4.1: erster Ersatzwiderstand
- 5: Schneidspalt
- 6: Gegenschneidenträger
- 6.1: erster Ersatzwiderstand
- 7: Einstellmechanismus
- 7.1: dritter Ersatzwiderstand
- 8: Arm
- 9: Gelenkpunkt
- 10: Häckseltrommelgehäuse
- 10.1: dritter Ersatzwiderstand
- 11: Lager
- 12: Kontaktstelle
- 12.1: Schalter
- 13: Isolierschicht
- 14: Unterlegscheibe
- 15: Schraube
- 16: Hülse
- 17;17': elektrische Verbindung
- 18;18': Spannungsquelle
- 19;19': Einrichtung
- 20;20': Strommesser

## Patentansprüche

1. Einstellvorrichtung für den Schneidspalt an Häckslem, insbesondere Feldhäckslern, mit:
◆ einer mit Häckselmessern (2) besetzten Häckseltrommel (1),
◆ einer einen Schneidspalt (5) zum Rotationskreis (3) der Häckselmesser (2) aufweisenden Gegenschneide (4) und ggf. einen sie tragenden Gegenschneidenträger (6),
◆ einem Einstellmechanismus (7) für den Schneidspalt (5),
◆ einem wenigstens die Häckseltrommel (1), die Gegenschneide (4), den Gegenschneidenträger (6) und den Einstellmechanismus (7) aufnehmenden Häckseltrommelgehäuse (10),
**dadurch gekennzeichnet, daß**
a) wenigstens die Gegenschneide (4) gegenüber den übrigen Teilen der Einstellvorrichtung elektrisch isoliert ist,
b) im Falle von in die elektrische Isolierung der Gegenschneide (4) wahlweise einbezogenem Gegegenschneidenträger (6) und ggf. noch dem Einstellmechanismus (7) diese Teile miteinander sowie auch mit der Gegenschneide (4) elektrisch leitend verbunden sind,
c) die übrigen zur Einstellvorrichtung gehörenden Teile Häckselmesser (2), Häckseltrommel (1), Häckseltrommelgehäuse (10) und ggf. der Einstellmechanismus (7) sowie der Gegenschneidenträger (6) ebenfalls miteinander elektrisch leitend verbunden sind,
d) die genannten elektrisch isolierten Teile gegenüber den übrigen zur Einstellvorrichtung gehörenden Teilen über eine elektrische Verbindung (17;17'),in der sich eine Spannungsquelle (18;18') und eine den Stromfluß auswertende Einrichtung (19;19') befinden, einen Meßkreis bildend elektrisch leitend verbunden sind.

2. Einstellvorrichtung nach Anspruch 1, **dadurch gekennzeichnet, daß** die Gegenschneide (4) und der Gegenschneidenträger (6) gegenüber dem Einstellmechanismus (7), dem Häckseltrommelgehäuse (10) und der Häckseltrommel (1) sowie den Häckselmessern (2) elektrisch isoliert sind.

3. Einstellvorrichtung nach Anspruch 1, **dadurch gekennzeichnet, daß** die Gegenschneide (4), der Gegenschneidenträger (6) und der Einstellmechanismus (7) gegenüber dem Häckseltrommelgehäuse (10), der Häckseltrommel (1) und den Häckselmessern (2) elektrisch isoliert sind.

4. Einstellvorrichtung nach den Ansprüchen 1 bis 3, **dadurch gekennzeichnet, daß** im Falle wenigstens einer Kontaktstelle (12) zwischen der Gegenschneide (4) und wenigstens einem Häckselmesser (2) der Meßkreis geschlossen ist.

5. Einstellvorrichtung nach den Ansprüchen 1 bis 3, **dadurch gekennzeichnet, daß** im Falle keiner Kontaktstelle (12) zwischen der Gegenschneide (4) und wenigstens einem Häckselmesser (2) der Meßkreis offen ist.

6. Einstellvorrichtung nach den Ansprüchen 1 bis 5, **dadurch gekennzeichnet, daß** die sich in der elektrischen Verbindung (17;17') des Meßkreises zwischen den elektrisch isolierten Teilen gegenüber den übrigen zur Einstellvorrichtung gehörenden Teilen befindende Spannungsquelle (18;18') eine Gleichspannungsquelle ist.

7. Einstellvorrichtung nach den Ansprüchen 1 bis 5, **dadurch gekennzeichnet, daß** die sich in der elektrischen Verbindung (17;17') des Meßkreises zwischen den elektrisch isolierten Teilen gegenüber den übrigen zur Einstellvorrichtung gehörenden Teilen befindende Spannungsquelle (18;18') eine Wechselspannungsquelle mit einer Frequenz von wenigstens 200 Kilohertz ist.

8. Einstellvorrichtung nach den Ansprüchen 1 bis 7, **dadurch gekennzeichnet, daß** die sich in der elektrischen Verbindung (17;17') des Meßkreises zwischen den elektrisch isolierten Teilen und den übrigen zur Einstellvorrichtung gehörenden Teilen befindende und den Stromfluß auswertende Einrichtung (19;19') ein Strommesser (20;20') mit Display ist.

9. Einstellvorrichtung nach den Ansprüchen 1 bis 7, **dadurch gekennzeichnet, daß** die sich in der elektrischen Verbindung (17;17') des Meßkreises zwischen den elektrisch isolierten Teilen und den übrigen zur Einstellvorrichtung gehörenden Teilen befindende und den Stromfluß auswertende Einrichtung (19;19') als Signalgeber ausgebildet ist.

10. Einstellvorrichtung nach den Ansprüchen 1 bis 7, **dadurch gekennzeichnet, daß** die sich in der elektrischen Verbindung (17;17') des Meßkreises zwischen den elektrisch isolierten Teilen und den übrigen zur Einstellvorrichtung gehörenden Teilen befindende und den Stromfluß auswertende Einrichtung (19;19') als auf den Bewegungsablauf des Einstellmechanismus (7) für den Schneidspalt (5) einwirkende Steuereinrichtung ausgebildet ist.

11. Einstellvorrichtung nach einem oder mehreren der Ansprüche 1 bis 10, **dadurch gekennzeichnet, daß** die elektrische Verbindung (17) einenends an den elektrisch isolierten Teilen an einem ihrer äußeren Enden kontaktgebend befestigt ist und anderenends kontaktgebend an den übrigen zur Einstellvorrichtung gehörenden Teilen.

12. Einstellvorrichtung nach einem oder mehreren der Ansprüche 1 bis 10, **dadurch gekennzeichnet, daß** eine elektrische Verbindung (17) mit ihrer Spannungsquelle (18) und ihrer den Stromfluß auswertenden Einrichtung (19) einenends an den elektrisch isolierten Teilen an einem ihrer äußeren Enden kontaktgebend befestigt ist und anderenends kontaktgebend mit den übrigen zur Einstellvorrichtung gehörenden Teilen und daß eine weitere elektrische Verbindung (17') mit ihrer Spannungsquelle (18') und ihrer den Stromfluß auswertenden Einrichtung (19') einenends am gegenüberliegenden Ende der elektrisch isolierten Teile kontaktgebend befestigt ist und anderenends ebenfalls am gegenüberliegenden Ende der übrigen zur Einstellvorrichtung gehörenden Teile.

13. Einstellvorrichtung nach einem oder mehreren der Ansprüche 1 bis 12, **dadurch gekennzeichnet, daß** an der Häckseltrommel (1) ein einem Häckselmesser (2) zugeordneter Permanentmagnet befestigt ist und daß sich in dessen Rotationsebene am Gegenschneidenträger (6) ein Magnetfeldsensor befindet.

## Claims

1. An adjusting device for the cutter gap on crop choppers, with:
◆ a chopper cylinder (1) equipped with chopping knives (2),
◆ a counter-cutter blade (4) and possibly a counter-cutter blade support (6) carrying it forming a cutter gap (5) from the rotational circle (3) of the chopping knife (2)
◆ an adjusting mechanism (7) for the cutter gap (5)
◆ a chopper cylinder casing containing at least the chopper cylinder (1), the counter-cutter blade (4), the counter-cutter blade support (6) and the adjusting mechanism (7),
**characterised in that**
a) at least the counter-cutter blade (4) is electrically isolated from the remaining parts of the adjusting device,
b) in the case of the counter-cutter blade support (6) and possibly also the adjusting mechanism (7) being included in the electrical isolation of the counter-cutter blade (4) these parts are electrically connected with each other and with the counter-cutter blade (4),
c) the remaining parts belonging to the adjusting device, the chopping knife (2), the chopper cylinder (1) chopper cylinder casing (10) and possibly the adjusting mechanism (7) and the counter-cutter blade support (6) are likewise electrically connected with each other,
d) the said electrically isolated parts are connected with the remaining parts belonging to the adjusting device via an electrical connection (17;17'), in which is situated a voltage source (18;18') and a device for evaluating the current flow (19;19'), which forms and electrically conducting measuring circuit.

2. An adjusting device in accordance with claim 1, **characterised in that**, the counter cutter blade (4) and the counter-cutter blade support (6) are electrically isolated from the adjusting mechanism (7), the chopper cylinder casing (10) and the chopper cylinder (1) and the chopping knives (2).

3. An adjusting device in accordance with claim 1, **characterised in that**, the counter-cutter blade (4), the counter-cutter blade support (6) and the adjusting mechanism (7) are electrically isolated from the chopper cylinder casing (10), the chopper cylinder (1) and the chopping knives (2).

4. An adjusting device in accordance with claims 1 to 3, **characterised in that**, in the event of at least one contact point (12) between counter-cutter blade (4) and at least one chopping knife (2) the measuring circuit is closed.

5. An adjusting device in accordance with claims 1 to 3, **characterised in that**, in the event of no contact point (12) between the counter-cutter blade (4) and at least one chopping knife (2) the measuring circuit is open.

6. An adjusting device in accordance with claims 1 to 5, **characterised in that**, voltage source (18;18') located in the electrical connection (17;17') of the measuring circuit between the parts electrically isolated from the remaining parts belonging to the adjusting device is a direct current source.

7. An adjusting device in accordance with claims 1 to 5, **characterised in that** the voltage source (18;18') located in the electrical connection (17;17') of the measuring circuit between the parts electrically isolated from the remaining parts belonging to the adjusting mechanism is an alternating current source with a frequency of at least 200 kilohertz.

8. An adjusting device in accordance with claims 1 to 7, **characterised in that**, the current flow evaluating device (19;19') located in the electrical connection (17;17') of the measuring circuit between the electrically isolated parts and the remaining parts belonging to the adjusting device is an ammeter (20;20') with a display.

9. An adjusting device in accordance with claims 1 to 7, **characterised in that**, the current flow evaluating device (19;19') located in the electrical connection (17;17') of the measuring circuit between the electrically isolated parts and the remaining parts belonging to the adjusting device is designed as a signal generator.

10. An adjusting device in accordance with claims 1 to 7, **characterised in that**, in the electrical connection (17;17') of the measuring circuit between the electrically isolated parts and the remaining parts belonging to the adjusting device and the current flow evaluating device (19;19') there is a control unit for influencing the movements of the adjusting mechanism (7) for the cutter gap (5).

11. An adjusting device in accordance with one or more of the claims 1 to 10, **characterised in that**, the electrical connection (17) is attached at one end to the electrically isolated parts at one of its outer ends to make contact and at the other end it makes contact with the remaining parts belonging to the adjusting device.

12. An adjusting device in accordance with one or more of the claims 1 to 10, **characterised in that**, an electrical connection (17) with its voltage source (18) and its current evaluating device (19) is attached at one end to the electrically isolated parts at one of its outer ends to make contact and at the other end makes contact with the remaining parts belonging to the adjusting device and that a further electrical connection (17') with its voltage source (18') and its current evaluating device (19') is fixed so as to make contact at the opposite end of the electrically isolated parts and at the other end is likewise connected at the opposite end of the remaining parts belonging to the adjusting device.

13. An adjusting device in accordance with one or more of the claims 1 to 12, **characterised in that** on the chopper cylinder (1) on one chopper knife (2) a permanent magnet is attached and that in its rotational plane a magnetic field sensor is located on the counter-cutter blade support (6).

## Revendications

1. Dispositif de réglage de l'intervalle de coupe de hacheurs, en particuliers des récolteuses-hacheuses-chargeuses, avec :
◆ un tambour hacheur (1) équipé de lames tranchantes (2)
◆ un contre-couteau (4) avec un intervalle de coupe (5) pour le cercle de rotation (3) des lames tranchantes (2) ainsi qu'un support du contre-couteau (6) qui porte ce dernier,
◆ un mécanisme de réglage (7) pour l'intervalle de coupe (5),
◆ un carter de tambour hacheur (10) comprenant au moins le tambour hacheur (1), le contre-couteau (4), le support du contre-couteau (6) et le mécanisme de réglage (7),
**caractérisé en ce que**
a) au moins le contre-couteau (4) est isolé électriquement par rapport aux autres pièces du dispositif de réglage,
b) dans le cas du support du contre-couteau (6) associé au choix à l'isolation électrique du contre-couteau (4) et dans le cas du mécanisme de réglage (7), ces pièces sont reliées, de manière à faire passer le courant, les unes aux autres ainsi qu'au contre-couteau (4),
c) les autres pièces appartenant au dispositif de réglage, les lames tranchantes (2), le tambour hacheur (1), le carter du tambour hacheur (10) et, le cas échéant, le mécanisme de réglage (7) ainsi que le support du contre-couteau (6) sont également reliées, de manière à faire passer le courant, les unes aux autres,
d) les pièces mentionnées isolées électriquement par rapport aux autres pièces du dispositif de réglage par le biais d'une connexion électrique (17;17'),laquelle comprend une source de tension (18;18') et un dispositif d'évaluation du flux de courant (19:19'), sont reliées de manière à faire passer le courant et former ainsi un circuit de mesure.

2. Dispositif de réglage selon la revendication 1, **caractérisé en ce que** le contre-couteau (4) et le support du contre-couteau (6) sont isolés électriquement par rapport au mécanisme de réglage (7), au carter du tambour-hacheur (10), au tambour hacheur (1) et aux lames tranchantes (2).

3. Dispositif de réglage selon la revendication 1, **caractérisé en ce que** le contre-couteau (4), le support du contre-couteau (6) et le mécanisme de réglage (7) sont isolés électriquement par rapport au carter du tambour hacheur (10), au tambour hacheur (1) et aux lames tranchantes (2).

4. Dispositif de réglage selon les revendications 1 à 3, **caractérisé en ce que** le circuit de mesure est fermé s'il existe un point de contact (12) au moins entre le contre-couteau (4) et au moins une lame tranchante (2).

5. Dispositif de réglage selon les revendications 1 à 3, **caractérisé en ce que** le circuit de mesure est ouvert s'il n'existe pas de point de contact (12) entre le contre-couteau (4) et au moins une lame tranchante (2).

6. Dispositif de réglage selon les revendications 1 à 5, **caractérisé en ce que** la source de tension (18;18') présente dans la connexion électrique (17,17') du circuit de mesure entre les pièces isolées électriquement par rapport aux autres pièces faisant partie du dispositif de réglage est une source de tension continue.

7. Dispositif de réglage selon les revendications 1 à 5, **caractérisé en ce que** la source de tension (18;18 présente dans la connexion électrique (17,17') du circuit de mesure entre les pièces isolées électriquement par rapport aux autres pièces faisant partie du dispositif de réglage est une source de tension alternative d'une fréquence d'au moins 200 kilohertz.

8. Dispositif de réglage selon les revendications 1 à 7, **caractérisé en ce que** le dispositif (19;19') présent dans la connexion électrique (17,17') du circuit de mesure entre les pièces isolées électriquement par rapport aux autres pièces faisant partie du dispositif de réglage et évaluant le flux de courant est un ampèremètre (20;20') avec écran.

9. Dispositif de réglage selon les revendications 1 à 7, **caractérisé en ce que** le dispositif (19;19') présent dans la connexion électrique (17,17') du circuit de mesure entre les pièces isolées électriquement par rapport aux autres pièces faisant partie du dispositif de réglage et évaluant le flux de courant a la forme d'un transmetteur de signaux.

10. Dispositif de réglage selon les revendications 1 à 7, **caractérisé en ce que** le dispositif (19;19') présent dans la connexion électrique (17,17') du circuit de mesure entre les pièces isolées électriquement par rapport aux autres pièces faisant partie du dispositif de réglage et évaluant le flux de courant a la forme d'un dispositif de commande qui agit sur le déroulement du mouvement du mécanisme de réglage (7) de l'intervalle de coupe (5).

11. Dispositif de réglage selon une ou plusieurs des revendications 1 à 10, **caractérisé en ce que** la connexion électrique (17) est, d'une part, fixée de manière à faire contact à l'une des extrémités extérieures des pièces isolées électriquement et, d'autre part, est fixée de manière à faire contact aux autres pièces faisant partie du dispositif de réglage.

12. Dispositif de réglage selon une ou plusieurs des revendications 1 à 10, **caractérisé en ce qu'**une connexion électrique (17) est fixée, d'une part, de manière à faire contact à l'une des extrémités extérieures des pièces isolées électriquement et est fixée, d'autre part, de manière à faire contact aux autres pièces du dispositif de réglage et **en ce qu'**une autre connexion électrique (17'), sa source de tension (18) et son dispositif d'évaluation du flux de courant (19) sont fixés, d'une part, de manière à faire contact à l'extrémité opposée des pièces isolées électriquement et, sont fixés, d'autre part, à l'extrémité opposée des autres pièces faisant partie du dispositif de réglage.

13. Dispositif de réglage selon une ou plusieurs des revendications 1 à 12, **caractérisé en ce qu'**un aimant permanent, dépendant de l'une des lames tranchantes (2), est fixé au tambour hacheur (1) et **en ce qu'**un capteur de champ magnétique est disposé sur le support du contre-couteau (6), dans son plan de rotation.
